# EUROPEAN PATENT SPECIFICATION

(11) **EP 1 064 858 B1**
(45) Date of publication and mention of the grant of the patent: **28.12.2005**
(21) Application number: 00113638.1
(22) Date of filing: 28.06.2000
(51) Int. Cl.: A23L 1/308, A23L 1/0534, A23L 1/054

(54) **Chemically derivatized non-digestible and/or non-absorbable biopolymers as competitive antagonists of intestinal absorption of nutrients**
Chemisch derivatisierte, unverdauliche und/oder nicht-absorbierbare Biopolymere als konkurrierende Antagonisten der intestinalen Absorption von Nahrungsstoffen
Biopolymères non digestibles et/ou non-absorbables chimiquement dérivatisés en tant qu'antagonistes concurrentiels d'absorption intestinale de nutrients

(30) Priority: 01.07.1999 IT MI991458
(43) Date of publication of application: 03.01.2001
(73) Proprietor: Ring Holding S.p.A., 30100 Venezia-Mestre (IT); D & A S.r.l., 30100 Venezia-Mestre (IT)
(72) Inventor: Donadelli, Maurizio, 30020 Quarto d'Altino (VE) (IT); Volpato, Ivo, 06070 S. Mariano (PG) (IT); Bizzini, Bernhard, 81000 Albi (FR); Scapagnini, Giovanni, 95028 Valverde (CT) (IT)
(74) Representative: Gervasi, Gemma

(56) References cited:
- US-A- 5 569 483
- US-A- 5 855 987

## Description

### Field of the invention

The present invention refers to chemically derivatized non-digestible and/or non-absorbable biopolymers, as competitive antagonists of the intestinal absorption of nutrients.

### Prior art

The six main nutritious components, or nutrients, are carbohydrates, proteins, fats, vitamins, minerals, and water. They supply the organism with the energy and substances required for maintaining its functional integrity.

Nutrients absorption takes place *via* two possible mechanisms, a passive and an active transport.

50% of the total caloric intake consists of carbohydrates, which are not essential components as they can be endo-synthesized by the organism. However, the endogenous synthesis of carbohydrates envisages mobilization, in particular, of amino acids. It follows that a low-carbohydrate diet can provoke metabolic unbalance causing a high nitrogen excretion in the urine, especially in the presence of high lipid concentrations. Therefore, carbohydrates are an essential element due to their protide-saving effect.

The nutritional supply of lipids is a very important topic from the clinical point of view, since the alteration of this process is one of the main risk factors for the onset of cardiovascular diseases and of other fairly common pathologies, such as diabetes mellitus, pancreatitis, hypothyroidism; furthermore it is responsible for obesity, which actually derives from an excessive accumulation of lipids.

On the other hand, lipids are indispensable nutrients: in fact, they supply the organism with fatty acids, which cannot be endo-synthesized by the organism and are essential for maintaining good health. Of great importance among said fatty acids is linoleic acid, which acts as a precursor in prostaglandins biosynthesis and contributes to maintaining the cell membrane normal functional state.

To be absorbed, lipids are emulsified at the intestinal lumen level, digested by hydrolytic enzymes and absorbed by the intestinal mucosa cells through a passive diffusion process. In particular, this is how triglycerides containing long-chain fatty acids are absorbed.

Medium-chain fatty acids have been recently used in some therapeutic diets; they have a metabolic destiny different from that of the long-chain ones and exert a different influence on the fatty acids bio-organic cascade, with a consequent reduction in cholesterol and unsaturated fatty acids levels.

The glucides mostly present in the diet are polysaccharides and oligosaccharides.

Their digestion and absorption processes occur gradually through simple passive diffusion or, in the case of D-glucose, D-fructose, D-galactose and, perhaps, D-mannose, through an active transport mechanism also against the concentration gradient. This means that some sugars can be absorbed by the intestine even if their haematic concentration is already very high.

Amino acids derived from the digestion of proteins taken in with the diet are used as a nitrogen source in the biosynthesis of proteic and non-proteic substances. All amino acids have to be simultaneously present for the normal occurrence of said biosynthesis. Furthermore, there are some essential amino acids that cannot be endo-synthesized and that, therefore, must be present in the diet.

Among the organic molecules contained in diets that cannot be synthesized by the organism or that can be synthesized, but in an amount lower than that required for maintaining the state of health, are vitamins. The type of diet conditions the lipo- and/or hydro-soluble vitamins supply: for example, a low-lipid diet may be deficient in lipo-soluble vitamins.

Finally, there are inorganic components of the organism that belong to the diet essential elements, such as sodium, magnesium, iron, phosphorus, chlorine and sulphur, together with other elements, such as copper, cobalt, molybdenum, manganese, zinc, chromium, iodine, fluorine, selenium, which are present in very low quantities, but anyhow endowed with a considerable biofunctional importance.

Dietetic requirements vary depending on age, bodyweight, sex, type of activity, physiological conditions, concomitant pathological processes. In fact, basal metabolism, which represents the energy consumed by an individual, varies depending on various situations.

If weight loss were required, this should be obtained by a gradual increase in the energy consumption through physical exercise, associated with a diet suitable for reducing calories intake. Conversely, said approach has little probability of success due to various functional and behavioural side effects, caused by the forced giving up of food and by the reduced intake of specific nutrients.

In fact, whenever an exogenous event, such as for example diet, fasting, pharmacological treatment, causes physiological nutrients deficiency, there occurs the onset of mechanisms for an increased use of the organic material deposited, a successive biosynthesis from endogenous material and, by a feedback effect, the activation of the demand of exogenous nutritional material, i.e. appetite stimulation.

Said stimulation is controlled by the central nervous system that excites the biochemism connected with appetite and nutrients assimilation. Some psychological aspects also contribute to said stimulation, such as the sense of deprivation, the reaction to forced abstinence, which results in the desire of "forbidden" food.

A typical example of pharmacological treatment, active at an intestinal level, consists in dietary fibres. Many products can be used as fibre supplements in a diet, which include natural and semisynthetic polysaccharides, such as dextrans and pectin, corn-derived cellulose, seed husks or other materials, such as bran, methylcellulose, carboxymethylcellulose and synthetic resins.

Said dietary fibres mainly increase the fecal mass by inhibiting the reabsorption of substances such as bile acids, cholesterol, lipoproteins. Conversely, their effectiveness as appetite suppressors in the treatment of obesity and their supposed action on functional biomechanisms have not yet been substantiated.

Cellulose can bind and reduce the intestinal absorption of several substances, such as cadioactive glucosides, salicylates and nitrofurantoin.

Several examples of compositions based on dietary fibres, variously mixed or derivatised, have already been disclosed. US patent 3,023,104 (Battista Orlando) refers to crystalline cellulose aggregates associated with low-calorie food mixtures.

Patent application JP 57088122 (Kusachi Y) discloses substances that inhibit glucose absorption, such as phloretin, bound to cellulose and dextrans. Patent application EP 0 502 666 (Dow Chemical Co.) refers to high-density, water soluble and non-digestible cellulose ethers capable of selectively reducing cholesterol and low-density lipoproteins. Patent application WO 96/14851 (Procter & Gamble Co.) describes cationic cellulose derivatives bound to quaternary ammonium groups useful for reducing cholesterol levels in serum. As concerns synthetic derivatives having an analogous activity, mention is made of IT patent 1,214,708 which refers to diethylaminoethyl dextran as a sequestering agent for fatty acids.

Other products known in the art, used to this purpose, are based on the principle of increasing the amount of nutritional fibre and/or forming non-absorbable colloidal masses at an intestinal lumen level, with a view to entrapping nutrients and giving a sense of repletion. Among these products are barley or other vegetables extracts, more or less supported by materials such as maltose, semisynthetic celluloses, rubbers, polyacrylic resins and hydrophilic derivatives thereof. All the above products are to be administered in place of normal meals: therefore, also this type of treatment has the same side effects as fasting and the aforementioned diets.

Finally, even pharmacological treatments, such as those based on substances that are active on the central nervous system, capable of promoting appetite suppression, do not offer significant advantages since, by stimulating appetite inhibitors, they stimulate, by feedback reaction, the activators of same.

Furthermore, it is to be borne in mind that a treatment of this type has side effects, tolerance and toxic effects by repeated treatment. US 5,855,987 discloses polysaccharides chemically derivatizated with bioactive proteins and their use in the treatment of wounds.

### Summary

It has now surprisingly been found that non-digestible, non-absorbable biopolymers derivatized with specific nutrients can compete with the absorption of nutrients contained in food, and rationalise the nutrients supply by modulating the absorption of specific compounds such as lipids, glucides and amino acids.

Therefore, the present invention refers to non-digestible and/or non-absorbable biopolymers, chemically derivatized with specific nutrients.

### Description of the invention

It is an object of the present invention to provide non-digestible and/or non-absorbable biopolymers, derivatized with specific nutrients.

The biopolymers useful for the purposes of the present invention may be selected from the group consisting of celluloses, methylcelluloses, polysaccharides and dextrans. Preferred polysaccharides are galactomannans purified from *Ceratonia siliqua* (carob) and cross-linked alginates.

Said biopolymers can be derivatized with one or more types of nutrients. Nutrients can be selected from the group consisting of lipids, glucides and amino acids.

Preferred lipids are linoleic acid and, in general, medium-short chain unsaturated acids such as, for example, oleic and linoleic acids. The preferred lipid for the scope of the present invention is linoleic acid.

As concerns the glucidic nutrients of interest for the present invention, fructose, maltose, sorbitol and derivatives thereof are mostly preferred.

Said biopolymers are administered during normal meals in different foods, like bread, crackers, breadsticks, biscuits, yoghurt, and the like.

Therefore, it is a further object of the present invention to provide foods containing non-digestible and/or non-absorbable biopolymers derivatized with nutrients according to the invention.

Said foods may also contain vitamins and/or phospholipids. In fact, the process of competition on the absorption of nutrient lipids, activated with the biopolymers of the invention, might negatively affect the absorption of liposoluble vitamins and phospolipids. Therefore, the present invention envisages the enrichment of the food containing said biopolymers with specific vitamins, such as vitamins A, D, E and K, and with phospholipids.

Nutrients conjugated with the biopolymers of the present invention, administered with normal foods, compete for absorption through the intestinal barrier with the corresponding chemical structures contained in said normal foods. Since the nutrients of the present invention are bound to non-digestible and/or non-absorbable substances, i.e. the biopolymers, the absorption of specific components, i.e. lipids, glucides and/or amino acids, is reduced.

This effect is quite marked because said substances, due to their indigestibility, have a long residence time in the intestinal bolus and, therefore, produce their competitive antagonist effect during the whole digestive process.

Furthermore, the biopolymers of the invention exert the typical action of dietary fibres on constipation.

The concominant administration of normal foods and foods containing derivatized biopolymers of the invention allows the laying out of slimming or corrective diets, whereby the subject can feed on normal food complete with all nutrients. It follows that all effects on the psyche and of physiological feedback derived from the deprivation of food and of particular nutrients are eliminated. This is possible in view of the fact that, as a consequence of the natural intestinal metabolism, a small portion of radicals conjugated with the biopolymers of the invention is released and, therefore, absorbed. It is thus possible to supply the organism with essential and therapeutically valid nutrients, e.g. linoleic acid, with elimination of the physiological mobilisation process of stored substances and the consequent feedback effect on appetite stimulation.

The principle at the basis of the present invention may be also adopted to antagonise the absorption of specific amino acids, thus facilitating the supply to the organism of other particular amino acids. For example, wishing to antagonise the supply of glutamic acid, known for its neurotoxic effects, the supply of glutamine, which, instead, is an essential brain modulator metabolite may be facilitated. A further case refers to situations in which it is desirable to increase the supply of arginine, a growth promoter, to the detriment of other amino acids not directly involved in said mechanism.

Paying attention to a right total caloric supply only and allowing the organism to receive all foods, it is possible to correct obesity, excessive weight and, in general, intervene in all cases in which a body mass reduction is desired as well as contribute to the treatment of hyperglycemic and hyperlipidic states and amino acids deficiency, all this without the occurrence of side effects derived from the lack of essential nutrients caused by an indiscriminate food deprivation (for example trace elements present in meat).

The biopolymers of the invention may be activated by different methods known in the art: for example, by the method described by Molteni L., Dextran and Inulin Conjugates as Drug Carriers, Meth. in Enzymol., 1985, 112, 285-298. Activated biopolymers are conjugated with compounds containing a primary amino group such as, but not necessarily, an amino acid. On its turn, this amino residue is derivatised with unsaturated fatty acids (linoleic acid, medium-short chain fatty acids) or with glucides according to the methods of synthesis and with the molar ratios reported in the examples described hereinafter. Obviously, should a derivatization exclusively with amino acids be desired, these will be attached - as mentioned above - to the biopolymer without further derivatization.

### Example 1

### Synthesis of cellulose-lysine-linoleic acid conjugate

### 1. Cellulose oxidation

Cellulose (about 1 g, 3.3x10⁻⁵ mols glucose) was dispersed in 0.1M acetate buffer (20 ml), pH=5.5, containing 0.1M NalO₄ (2x10⁻⁴ mols) and the suspension was stirred at room temperature for 30 min. The reaction was stopped by addition of 1M glycerol (200 µl).

### 2. Cellulose-lysine conjugation

Oxidised cellulose as per step 1 was dialysed against PBS buffer (phosphate/saline solution 0.1M, pH=7.4), using a tube having a limit of 10 kD, at a temperature of 4 to 8°C for 48 hrs. The dialysate was added with lysine (5 mg, 3.4x10⁻⁵ mols) in distilled water (2 ml), and the mixture was stirred at room temperature for 2 hrs, dialysed against water, using a tube having a limit of 10 kD, at 4 to 8°C for 48 hrs.

### 3. Cellulose-lysine-linoleic acid conjugation

A solution of linoleic acid (7.65x10⁻⁵ mols) in water (2 ml)- and 1-ethyl-3-(3-dimethylaminopropyl)carbodiimide (EDAC, 50 mg) were added, under stirring, in sequence to the cellulose-lysine conjugate obtained as per step 2. pH was maintained at 6.5-7 for 1 hr; the mixture was stirred for 3 additional hrs at room temperature and dyalized against water in a tube having a limit of 1000 D, for 48 hrs at 4-8°C. The dialysate was dried over rotary evaporator under vacuum with slight heating (40-60°C) to give the desired compound.

### Example 2

### Synthesis of cellulose-lysine-fructose cojuqate

### 1. Fructose oxidation

Fructose (6 mg) was dissolved in 0.1M acetate buffer (10 ml), pH=5.5, containing 0.1M NalO₄ (10⁻³ mols) and the suspension was stirred at room temperature for 20 to 30 min. The reaction was stopped by addition of 1M glycerol (200 µl).

### 2. Cellulose-lysine-fructose conjugation

The fructose solution obtained in preceding step 1 was added to the cellulose-lysine intermediate as per Example 1, step 2. pH was brought to 7.4. The mixture was stirred at room temperature for 2 hrs, dialysed against water in a tube having a limit of 1000 D, at a temperature of 4 to 8°C for 48 hrs. The dialysate was dried over rotary evaporator under vacuum with slight heating (40 to 60°C) to give the desired compound.

### Example 3

### Synthesis of cellulose-L-arginine conjugate

Oxidised cellulose obtained as per Example 1, step 1, was dialysed against PBS buffer (phosphate/saline solution 0.1M, pH=7.4) in a tube having a limit of 10 kD, at a temperature of 4 to 8°C for 48 hrs. L-arginine (6 mg, 3.5x10⁻⁵ mols) in water (1 ml) was added to the dialysate and the mixture was stirred at room temperature for 2 hrs, dialysed against water in a tube having a limit of 1000 kD, at 4 to 8°C for 48 hrs. The dialysate was dried over rotary evaporator under vacuum with slight heating (40 to 60°C) to give the desired compound.

### Example 4

### Synthesis of cellulose-L-glutamine conjugate

Oxidised cellulose as per Example 1, step 1, was dialysed against PBS buffer (phosphate/saline solution 0.1M, pH=7.4) in a tube having a limit of 10 kD, at a temperature of 4 to 8°C for 48 hrs. L-glutamine (5 mg, 3.4x10⁻⁵ mols) in water (1 ml) was added to the dialysate. The procedure followed to give the desired compound was as described in Example 3.

### Example 5

### Evaluation of the cellulose-L-lysine-linoleic acid (CLLA) competition on food fats absorption in fattening rats

Wistar rats of one sex, weighing 100 ± 10 g approx., were divided into groups of 12 animals each, maintained at normal stalling conditions, in cages housing 4 animals each, with free access to water, and fed according to the following scheme:
- Group 1:: standard diet (controls)
- Group 2:: diet enriched with animal butter (5%, w/w) incorporated in pellets (controls- hyperlipidic diet)
- Group 3:: diet enriched with animal butter (5%, w/w) and CLLA (5%, w/w) incorporated in pellets (treated - 1st dose level)
- Group 4:: diet enriched with animal butter (5%, w/w) and CLLA (10%, w/w) incorporated in pellets (treated - 2nd dose level)

Food consumption of each group was controlled daily. The bodyweight of each animal was controlled every 15 days. The experiment continued for 90 days. The influence of the treatment with cellulose derivitized with linoleic acid on the body growth trend and on the haematic levels of lipids after hyperlipemic diet was evaluated.

The results are shown in graphs 1 and 2.

Graph 1 shows the average daily consumption of food, expressed as % variation vs. controls (assumed to be equal to zero).

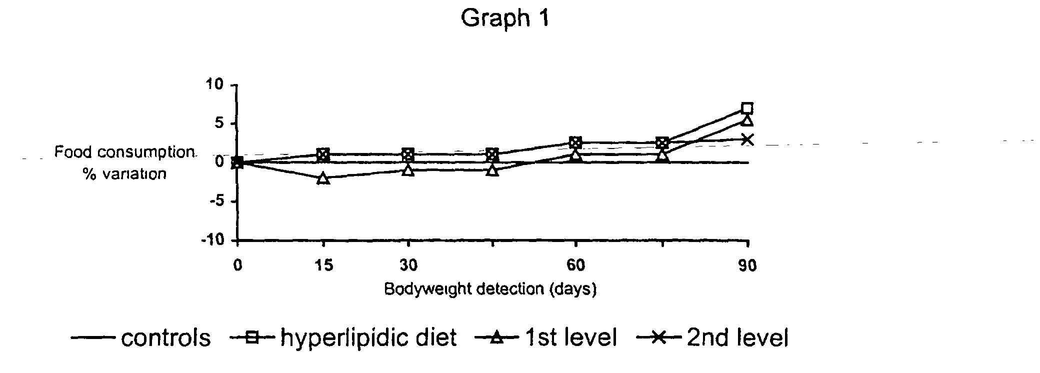

Graph 2 shows the % variation of No substantial food consumption variations between animals subjected to different diets are evidenced.
the bodyweight trend evaluated on the average of each single group vs. controls treated with a standard diet, assumed to be equal to zero.

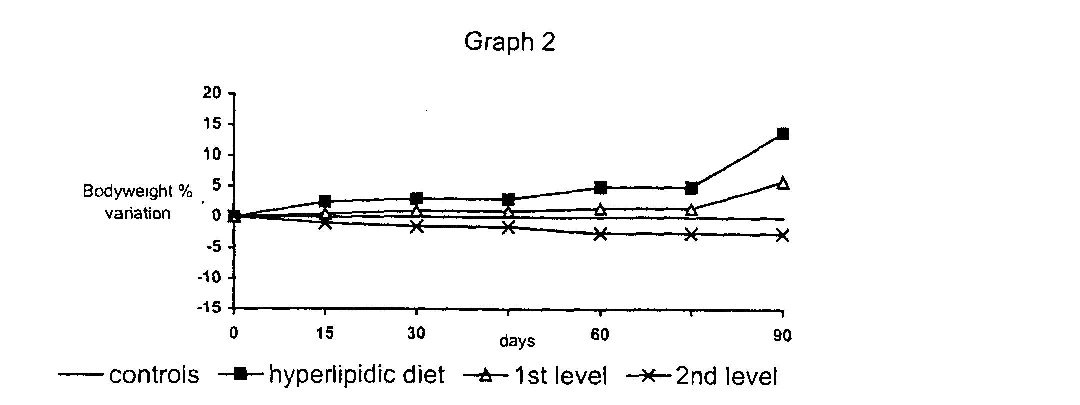

A significant weight gain in animals on high fat diet is evidenced. Said weight gain is considerably reduced in animals on fat diet and treated at the same time with derivatized cellulose at the lowest tested dose (1st level), whereas it is practically nil when animals are treated with a higher dose of derivatized cellulose (2^{nd} level).

### Example 6

### Evaluation of the effectiveness of cellulose-lysine-linoleic acid (CLLA) and cellulose-lysine-fructose (CLF) in a normally fed overweight volunteer

Twenty-four overweight subjects, 35 to 55 years old, with glucide and lipids haematic rates above the normal range, were selected. The subjects randomised by sex, age, height, weight, and haematic parameters, were subdivided into 2 groups. The daily diet of both groups was strictly controlled and fixed by experimenters with regard to daily caloric content and food lipids and glucides concentration. Also the type of foods in the various meals was randomised between the two groups, to have almost the same content of lipids and glucides nutritional sources. On the whole, the daily caloric content corresponded to a normal diet as per the nutritional tables published in "Food and Nutrition Board", Natl. Acad. Sci. - Natl. Res. Council, 7^{th} ed., 1968, No. 1694, Washington, USA.

Out of the two groups, one received normal food only and was used as a control: for example, in the various daily meals said group ate normal yoghurt, biscuits, bread rolls, breadsticks, crackers.

The second group received normal meals integrated with the aforesaid products (yoghurt, etc.) containing 5% (w/w) CLLA and 5% (w/w) CLF, aromatised to be perfectly superimposable with the relevant controls.

Experiments, which lasted 6 months, were double-blind, i.e. neither the experimenter nor the volunteer knew the nature of received/ingested supplements.

The following was performed:
the check of the bodyweight trend, with monthly frequency
the chemico-clinical analysis of serum cholesterol and glucose, as an index of the glucides and lipids supplied by food.

Serum cholesterol and glucose were measured by the usual clinical diagnosis tests (cholesterol kit: Sigma 352.20; glucose kit: Sigma 16.20). During the whole test period, the subjects' physical activity and drug intake were also controlled.

Graph 3 shows the average bodyweight trend of the treated subjects in comparison with the controls, expressed as a difference in kg from the average at time zero (start of treatment).

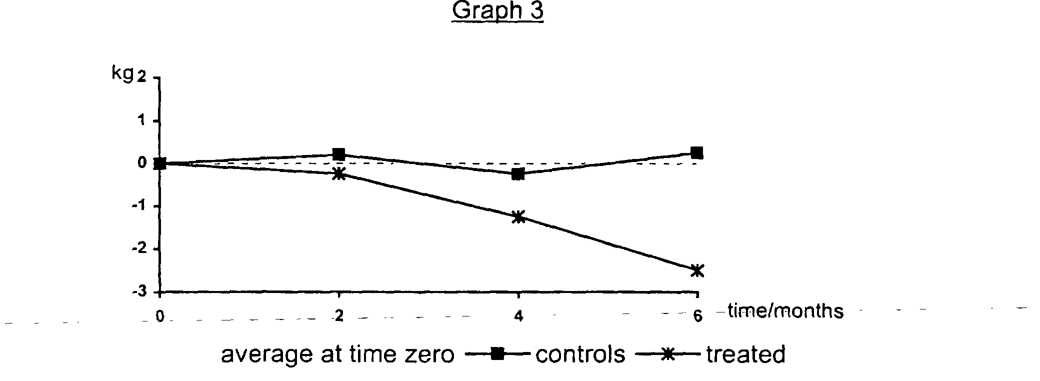

Graph 4 shows the average trend of serum cholesterol of treated subjects and controls, expressed as a % variation from the overall average at time zero, considered equal to 100.

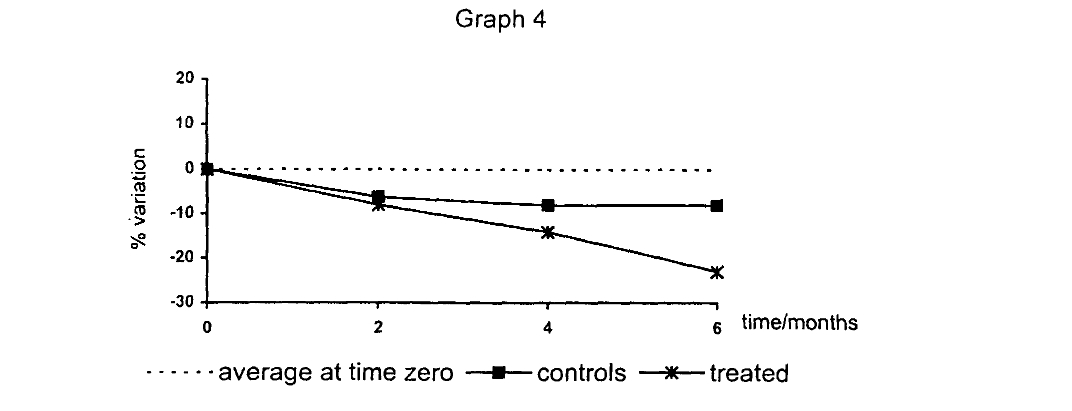

Graph 5 shows the average trend of serum cholesterol of treated subjects and controls, expressed as a % variation from of the overall average at time zero, considered equal to 100.

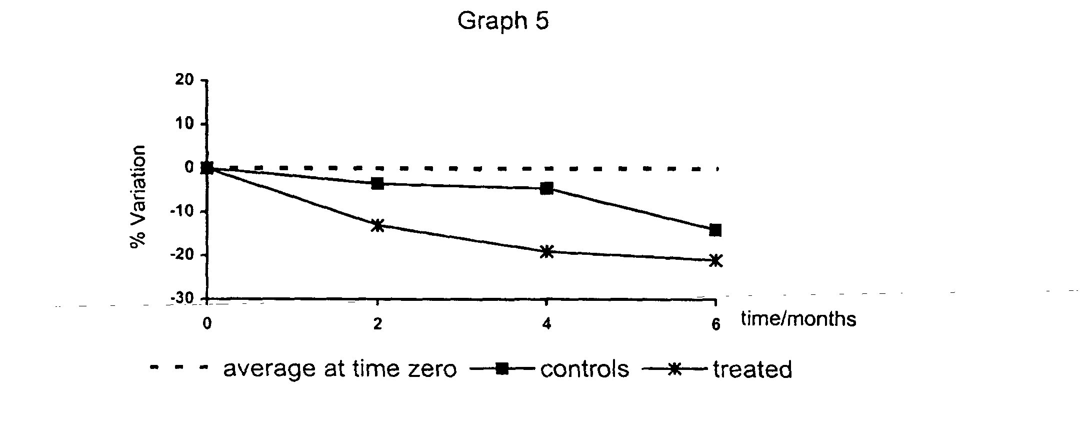

The results obtained from experiments conducted on animals and human volunteers show that the administration of derivatized biopolymers of the invention is able to reduce the supply of the nutrients corresponding to those bound to the biopolymer. This is proved by the significant reduction in the bodyweight and, in particular, by the lower serum levels of the nutrients considered.

This is a proof that the compounds of the invention, administered with a normal diet, in the form of food substitutes (yoghurt, bread, biscuits, crackers, etc.) directly compete with the absorption of particular compounds present in foods, e.g. glucides and lipids.

This is particularly useful for correcting body overweight, for the treatment of obesity, diabetes, and more in general in all situations that require a reduction in the supply of specific nutritional active ingredients to the organism.

## Claims

1. Non-digestible and/or non-absorbable biopolymers, chemically derivatized with one or more nutrients selected from the group consisting of lipids, glucides and amino acids.

2. The biopolymers as claimed in claim 1 selected from the group consisting of celluloses, methylcelluloses, polysaccharides, dextrans.

3. The biopolymers as claimed in claim 2, wherein the polysaccharides are galactomannans purified from *Ceratonia siliqua* o or cross-linked alginates.

4. The biopolymers as claimed in claims 1 to 3, wherein the lipids are medium-short chain unsaturated acids.

5. The biopolymers as claimed in claim 4, wherein the lipid is linoleic acid.

6. The biopolymers as claimed in claim 1 to 5, wherein the glucides are selected from the group consisting of fructose, maltose, sorbitol, and derivatives thereof.

7. Use of non-digestible and/or non-absorbable biopolymers, chemically derivatized with nutrients for the manufacture of oral compositions for use in the treatment of obesity, overweight, and in general in all the cases in which a reduction of body mass is required, and to coadiuvate the treatment of hyperglycemic and hyperlipidic states and of amino acids deficiencies.

8. Foods containing non-digestible and/or non-absorbable biopolymers, chemically derivatized with nutrients.

9. Foods as claimed in claim 8, wherein the biopolymers are selected from the group consisting of cellulose, methylcellulose, polysaccharides and dextrans

10. Foods as claimed in claims 8 or 9, wherein the polysaccharides are galactomannans purified from *Ceratonia siliqua* or cross-linked alginates.

11. Foods as claimed in claim 8, wherein the nutrients are selected from the group consisting of lipids, glucides and amino acids.

12. Foods as claimed in claim 11, wherein the lipids are medium-short chain unsaturated acids.

13. Foods as claimed in claim 12, wherein the lipid is linoleic acid.

14. Foods as claimed in claim 11, wherein the glucides are selected from the group comprising fructose, maltose, sorbitol and derivatives thereof.

15. Foods as claimed in claims 8 to 14 further containing vitamins and/or phospholipids.

16. Foods as claimed in claim 8 to 15, consisting of bread, crackers, breadsticks, biscuits, yoghurt.

17. Foods as claimed in claim 8 for use in the treatment of obesity, overweight and, in general, in all the cases in which a reduction in body mass is required, and to coadiuvate the treatment of hyperglycemic and hyperlipidic states and of amino acids deficiency.

## Patentansprüche

1. Unverdauliche und/oder nicht resorbierbare Biopolymere, chemisch derivatisiert mit einem Nährstoff oder mehreren Nährstoffen, ausgewählt aus der Gruppe bestehend aus Lipiden, Gluciden und Aminosäuren.

2. Die Biopolymere, wie in Anspruch 1 beansprucht, ausgewählt aus der Gruppe bestehend aus Zellulose, Methylzellulose, Polysacchariden, Dextranen.

3. Biopolymere, wie in Anspruch 2 beansprucht, wobei es sich bei den Polysacchariden um aus *Ceratonia siliqua* gewonnene und gereinigte Galaktomannane oder quervernetzte Alginate handelt.

4. Biopolymere, wie in den Ansprüchen 1 bis 3 beansprucht, wobei es sich bei den Lipiden um mittellange bis kurzkettige ungesättigte Säuren handelt.

5. Biopolymere, wie in Anspruch 4 beansprucht, wobei das Lipid eine Linolsäure ist.

6. Biopolymere, wie in den Ansprüchen 1 bis 5 beansprucht, wobei die Glucide ausgewählt werden aus der Gruppe bestehend aus Fruktose, Maltose, Sorbitol und Derivaten davon.

7. Verwendung von unverdaulichen und/oder nicht resorbierbaren Biopolymeren, chemisch derivatisiert mit Nährstoffen für die Herstellung von oralen Zusammensetzungen für die Verwendung zur Behandlung von Adipositas, Übergewicht und im Allgemeinen in allen Fällen, in denen eine Reduktion des Körpergewichtes angezeigt ist und zur unterstützenden Behandlung von Hyperglykämie und Hyperlipidämie sowie Aminosäuremangelzuständen.

8. Nahrungsmittel, enthaltend unverdauliche und/oder nicht resorbierbare Biopolymere, chemisch derivatisiert mit Nährstoffen.

9. Nahrungsmittel, wie in Anspruch 8 beansprucht, wobei die Biopolymere ausgewählt werden aus der Gruppe bestehend aus Zellulose, Methylzellulose, Polysacchariden und Dextranen.

10. Nahrungsmittel, wie in Anspruch 8 oder 9 beansprucht, wobei es sich bei den Polysacchariden um aus *Ceratonia siliqua* gewonnene und gereinigte Galaktomannane oder quervernetzte Alginate handelt.

11. Nahrungsmittel, wie in Anspruch 8 beansprucht, wobei die Nährstoffe ausgewählt werden aus der Gruppe bestehend aus Lipiden, Gluciden und Aminosäuren.

12. Nahrungsmittel, wie in Anspruch 11 beansprucht, wobei es sich bei den Lipiden um mittellange bis kurzkettige ungesättigte Säuren handelt.

13. Nahrungsmittel, wie in Anspruch 12 beansprucht, wobei es sich bei dem Lipid um Linolsäure handelt.

14. Nahrungsmittel, wie in Anspruch 11 beansprucht, wobei die Glucide ausgewählt werden aus der Gruppe umfassend Fruktose, Maltose, Sorbitol und Derivate davon..

15. Nahrungsmittel, wie in den Ansprüchen 8 bis 14 beansprucht, die zusätzlich Vitamine und/oder Phospholipide enthalten.

16. Nahrungsmittel, wie in den Ansprüchen 8 bis 15 beansprucht, bestehend aus Brot, Crackern, Brotstangen, Keksen, Joghurt.

17. Nahrungsmittel, wie in Anspruch 8 beansprucht, für die Verwendung zur Behandlung von Adipositas, Übergewicht und im Allgemeinen in allen Fällen, in denen eine Reduktion des Körpergewichts erforderlich ist und als unterstützende Behandlung von Hyperglykämie und Hyperlipidämie sowie Aminosäuremangelzuständen.

## Revendications

1. Biopolymères non digestibles et/ou non absorbables, chimiquement dérivatisés avec un ou plusieurs nutriments choisis dans le groupe consistant en lipides, glucides et acides aminés.

2. Biopolymères selon la revendication 1, choisis dans le groupe consistant en celluloses, méthylcelluloses, polysaccharides, dextranes.

3. Biopolymères selon la revendication 2, dans lesquels les polysaccharides sont des galactomannanes purifiés provenant de *Ceratonia siliqua* ou des alginates réticulés.

4. Biopolymères selon les revendications 1 à 3, dans lesquels les lipides sont des acides insaturés à chaîne moyenne/courte.

5. Biopolymères selon la revendication 4, dans lesquels le lipide est l'acide linoléique.

6. Biopolymères selon les revendications 1 à 5, dans lesquels les glucides sont choisis dans le groupe consistant en fructose, maltose, sorbitol, et des dérivés de ceux-ci.

7. Utilisation de biopolymères non digestibles et/ou non absorbables, chimiquement dérivatisés avec des nutriments pour la fabrication de compositions orales destinées à une utilisation dans le traitement de l'obésité, du surpoids, et en général dans tous les cas pour lesquels une réduction de la masse corporelle est nécessaire, et pour être un coadjuvant du traitement des états hyperglycémiques et hyperlipidiques et de carence en acides aminés.

8. Aliments contenant des biopolymères non digestibles et/ou non absorbables, chimiquement dérivatisés avec des nutriments.

9. Aliments selon la revendication 8, dans lesquels les biopolymères sont choisis dans le groupe consistant en cellulose, méthylcellulose, polysaccharides et dextranes.

10. Aliments selon la revendication 8 ou 9, dans lesquels les polysaccharides sont des galactomannanes purifiés provenant de *Ceratonia siliqua* ou des alginates réticulés.

11. Aliments selon la revendication 8, dans lesquels les nutriments sont choisis dans le groupe consistant en lipides, glucides et acides aminés.

12. Aliments selon la revendication 11, dans lesquels les lipides sont des acides insaturés à chaîne moyenne/courte.

13. Aliments selon la revendication 12, dans lesquels le lipide est l'acide linoléique.

14. Aliments selon la revendication 11, dans lesquels les glucides sont choisis dans le groupe comprenant le fructose, le maltose, le sorbitol et des dérivés de ceux-ci.

15. Aliments selon les revendications 8 à 14, contenant en outre des vitamines et/ou des phospholipides.

16. Aliments selon les revendications 8 à 15, consistant en pain, biscuits salés, gressins, biscuits, yaourt.

17. Aliments selon la revendication 8, destinés à une utilisation dans le traitement de l'obésité, du surpoids et, en général, dans tous les cas pour lesquels une réduction de la masse corporelle est nécessaire, et pour être un coadjuvant du traitement des états hyperglycémiques et hyperlipidiques et de carence en acides aminés.
